# EUROPEAN PATENT SPECIFICATION

(11) **EP 2 807 879 B1**
(45) Date of publication and mention of the grant of the patent: **26.04.2017**
(21) Application number: 12866648.4
(22) Date of filing: 05.12.2012
(51) Int. Cl.: H04W 72/04

(54) **DYNAMIC DIRECTION CHANGING IN TIME DIVISION DUPLEX RADIOS**
DYNAMISCHE RICHTUNGSÄNDERUNG BEI ZEITDUPLEXFUNK
CHANGEMENT DE DIRECTION DYNAMIQUE DANS DES RADIOS DUPLEX À RÉPARTITION DANS LE TEMPS

(30) Priority: 23.01.2012 US 201261589774 P
(43) Date of publication of application: 03.12.2014
(73) Proprietor: Intel Corporation, Santa Clara, CA 95054 (US)
(72) Inventor: HE, Hong, Beijing 100190 (CN); FWU, Jong-Kae, Sunnyvale, CA 94087 (US); ZHU, Yuan, Beijing 100012 (CN)
(74) Representative: Goddar, Heinz J.
(86) International application number: PCT/CN2012/085913
(87) International publication number: WO 2013/110228

(56) References cited:
- US-A1- 2009 201 838
- US-A1- 2009 201 838
- US-A1- 2011 211 503
- US-A1- 2011 211 503

## Description

### Background

This relates generally to time division duplex radio systems.

In time division duplex radio systems, a flexible deployment may not require a pair of spectrum resources. In general, interference between uplink and downlink directions may be considered when different uplink and downlink configurations are used among cells.

The current long term evolution standard, releases eight, nine and ten support asymmetric uplink and downlink allocations by providing seven different semi- statically configured uplink and downlink configurations. See Third Generation Partnership Project (3GPP) Technical Specification (TS) 36.213a10 and 3GPP TS 36.21 1 a10. These configurations can provide downlink subframe allocations in the range of between 40 to 90 percent.

The current semi-static allocation may not match the instantaneous traffic situation. A current mechanism for adapting uplink and downlink allocation is based on the system information change procedure. With that mechanism, a minimum latency of about 640 milliseconds is used for reconfiguration. Therefore, mechanisms that support dynamic allocation of uplink and downlink frames with lower latency would be desirable.

US 2011/0211503 A1 relates to a system enabling the dynamic allocation of certain sub frames as downlink or uplink resources in a time division duplexed over the air communications system. A base station or eNB may allocate certain subframes within a repeating radio frame of a TDD configuration as either DL or UL subframes for communicating to user equipment or UE devices to increase efficient use of system resources based on the data to be transmitted. Methods for determining the capabilities of a selected UE and based on the determining step, dynamically allocating certain subframes are disclosed. The methods and systems are compatible with user equipment that does not support the dynamic allocation of subframes.

US 2009/0201838 A1 relates to a method for dynamically changing downlink and uplink allocations. The method comprises operating a base station is under time division duplexing to communicate with one or more mobile devices using a frame structure, adjusting a downlink-uplink ratio to change an allocation between uplink and downlink data capacities in the frame structure, determining a mute interval based on the adjusted downlink-uplink ratio, generating mute information based on the mute interval to identify the one or more areas of the frame structure effected by the allocation change, and transmitting the mute information to the one or more mobile devices.

### Summary

The invention is defined by the independent claims. Advantageous embodiments are subject to the dependent claims.

### Brief Description Of The Drawings

Some embodiments are described with respect to the following figures:
Figure 1 is a depiction of evolved base station called an eNodeB and a user equipment according to one embodiment;
Figure 2 is frame structure using flexible transmission directions according to one embodiment;
Figure 3 is a depiction of one possible subframe pairing according to one embodiment;
Figure 4 is a depiction of dynamic switching between pattern A in the downlink direction and pattern B in an uplink direction;
Figure 5 is a flow chart for one embodiment of an eNodeB; and
Figure 6 is a flow chart for one embodiment of a user equipment.

### Detailed Description

In accordance with some embodiments in a time division duplex system, the transmission direction may be changed dynamically, for example in response to instantaneous traffic conditions. Particularly in some embodiments an eNodeB or base station may, in response to instantaneous traffic conditions, change the direction of transmission in certain subframes. In some embodiments this can be done in a way which is backwards compatible with prior generations of Long-Term Evolution (LTE) radio systems.

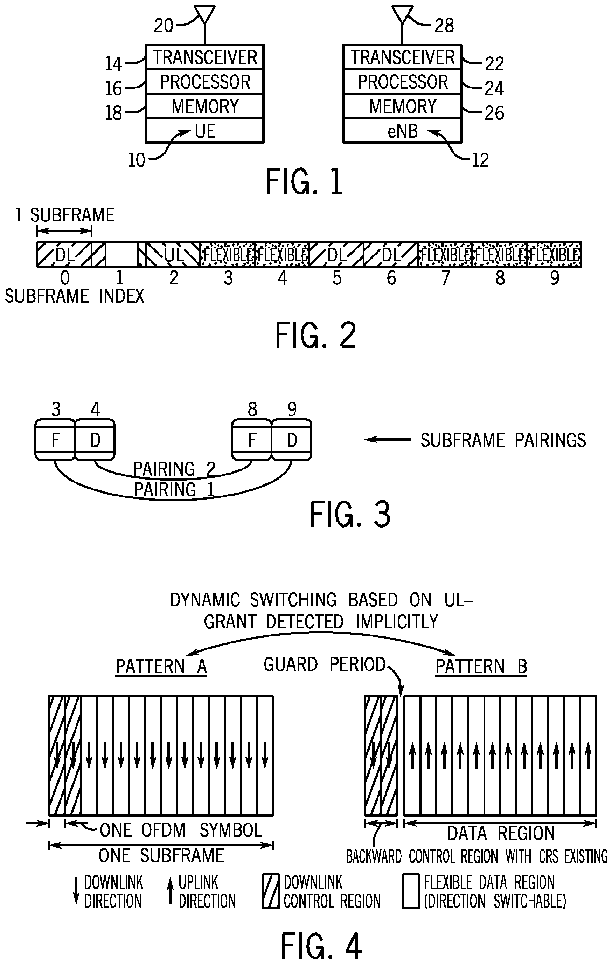

Referring to Figure 1, an eNodeB 12 communications by an antenna 28 with a user equipment (UE) or mobile station 10 through its antenna 20. For example, the eNodeB may basically be a base station which communicates with user equipment or mobile stations such as cellular telephones within its range.

The eNodeB 12 includes a transceiver 22 for wireless communications pursuant to an appropriate standard such as the standards pertinent to Long-Term Evolution technology, a processor 24 and a memory 26 that stores data and instructions executed by the processor 24 in some embodiments. The user equipment 10 likewise may include a compatible radio transceiver 14 coupled to a processor 16 and a memory 18.

Referring to Figure 2, certain subframes within a frame transmitted pursuant to an LTE technology may be defined as flexible subframes that support dynamic uplink and downlink reallocation. The user equipment by default may assume the flexible subframe is a downlink subframe in one embodiment. Then the user equipment decodes the physical downlink control channel in the flexible subframes unless explicitly instructed to switch to uplink transmission by the eNodeB. Of course the opposite default direction could also be used in some embodiments.

The flexible subframes may be transparent to previous generations of user equipment and the uplink and downlink configuration may be changed semi-statically using the system information block type 1 (SIB1) information bits. The eNodeB is responsible to properly schedule data transmissions to make sure the corresponding physical uplink shared channel resources (PUSCH) and hybrid automatic repeat request (HARQ) acknowledgement (ACK) resources of the physical downlink shared channel (PDSCH) and physical uplink shared channel (PUSCH) are still valid even when the time division duplex configuration is changed to implement dynamic transmission direction shifting.

When the dynamically configured transmission direction of the flexible subframes is different than the default configuration, as indicated by the system information block type 1, the flexible subframes may not be used or scheduled for a previous generation user equipment. The eNodeB may dynamically configure the flexible subframes to match the uplink downlink configuration advantageous given the instantaneous traffic situation. The eNodeB also may assure that the flexible subframe with dynamically configured transmission directions can be efficiently utilized by user equipment while maintaining the proper hybrid automatic repeat request acknowledgement (HARQ-ACK) feedback with predefined hybrid automatic repeat request timeline linked and corresponding to the configured uplink and downlink configurations.

According to some embodiments, an uplink and downlink reconfiguration indication mechanism informs the user equipment of the transmission direction for the flexible subframes in a timely fashion while reducing control overhead, satisfying the instantaneous traffic situation requirements and in some embodiments maintaining backward compatibility.

Thus as shown in Figure 2, there are ten subframes indicated by subframe indices 0-9. Downlink subframes have indices 0, 5, and 6, while uplink subframes have indices 2 and flexible subframes may have indices 3, 4 and 7-9 in one embodiment. In order to change the direction of a flexible subframe, a paired non-flexible or conventional subframe may be used to provide the indication of intent to switch from a default direction to a new direction. Thus each flexible subframe in one embodiment may be paired with a non-flexible subframe which non-flexible subframe may be used to provide the indication of when to switch from the default direction.

Thus referring to Figure 3, the flexible subframes with indices 3 and 8 are paired with a conventional downlink subframes, namely subframes 4 and 9. More specifically, the flexible subframe 8 may be paired with the downlink subframe 4 and the flexible subframe 3 may be compared with the downlink subframe 9. Of course, any other pairings may also be used and the pairings shown in Figure 3 are for illustration purposes only. Thus for Long-Term Evolution, time division duplex frame structure type 2, two subframe pairings may be predefined for uplink and downlink configuration. For example, the two subframe pairs shown in Figure 3 may be defined as X₀=9, Y₀=3 for pair 1 and X₁=4, Y₁=8 for pair 2. The subframes 4 and 8 may be in the same radio frame N, while the subframe 9 in radio frame N may be paired with a subframe 3 and the next radio frame N+1 respectively.

One flexible frame structure may be defined for uplink and downlink configuration and that flexible subframe may be applicable to time division duplex. Subframes 0, 1, 4, 5, 6, and 9, reserved and fixed for downlink transmission may be referred to as type 1 subframes, while subframes 2 and 7 may be reserved and fixed for uplink transmission and referred to as type 2 subframes, and a third type of subframe, the flexible subframe, is denoted as F and has a flexible transmission direction configured dynamically and referred to as type 3 subframes. Thus as one example, subframes 3 and 8 may be configured as flexible subframes. Then the supported uplink and downlink configurations are listed in Table 1 below where D denotes type 1, U denotes type 2, and U^{*} denotes type 3 subframes with the changed or uplink direction according to one embodiment.

| Subframe configuration | Backward configuration through SIB1 | Subframe number i | | | | | | | | | | DL Subframe ratio |
|---|---|---|---|---|---|---|---|---|---|---|---|---|
| | | 0 | 1 | 2 | 3 | 4 | 5 | 6 | 7 | 8 | 9 | |
| 0 | 2 | D | S | U | D | D | D | S | U | D | D | 80% |
| 1 | | D | S | U | D | D | D | S | U | U* | D | 70% |
| 2 | | D | S | U | U* | D | D | S | U | D | D | |
| 3 | | D | S | U | U* | D | D | S | U | U* | D | 60% |

An exemplary flexible subframe with switchable transmission direction in time domain multiplexing is shown in Figure 4 in pattern A, which is the default, according to one embodiment, in the downlink direction and pattern B, which is the switched pattern based on instantaneous traffic patterns and is in the uplink direction. These two patterns may be used to support the switchable/configurable transmission direction for each flexible subframe.

In the default pattern A according to one embodiment, the downlink control and data regions have the same direction of transmission. However in pattern B the control region and the data region have different transmission directions. Switching from pattern A to pattern B causes a transmission direction switching in a subset of orthogonal frequency division multiplexing (OFDM) symbols within the subframe. While certain OFDM symbols within the subframe remain the same, others switch. In one embodiment, the switching may involve only the data region symbols and not control region symbols. While two control OFDM symbols are depicted in Figure 4, one to three regions of OFDM control symbols may be used in other embodiments.

Thus the uplink transmission, namely from the user equipment to the eNodeB is restricted to a subset of OFDM symbols composed of the data region, while the control region remains the same and is used for transmission of physical downlink control channels with the cell-specific reference signals (CRS) contained in the first slot. Thus the pattern B may ensure that no direct impact on measurement accuracy results even when the flexible subframes are reconfigured for the uplink direction. This may be achieved, in one embodiment, by first switching the flexible subframes to Multimedia Broadcast Multicast Service (MBMS) single frequency network (MBMSFN) configuration. This means that the control region of OFDM symbols is always used for CRS transmissions and the data region is not used for CRS transmissions. This avoids the possibility that a user equipment that has not been informed of the committed direction change uses an incorrect assumption about the location of CRS information, and particularly assumes that it might be in the data region when in fact it is not.

The control regions are semi-statically reserved for downlink transmission through the system information block type 1 information message. Switching between pattern A and pattern B may be triggered when an uplink grant is detected in the corresponding subframe. The uplink grant is issued by the eNodeB to the user equipment in advance of the transition from pattern A to pattern B. The time division duplex configuration indicated through the system information block 1 may be set to be time division duplex frame configuration 2 in order to maximize the hybrid automatic repeat request timing reusing of physical downlink shared channel and physical uplink shared channel predefined for legacy user equipment. The flexible subframes are then dynamically reconfigured for downlink or uplink transmission by the eNodeB scheduler based on instantaneous traffic conditions.

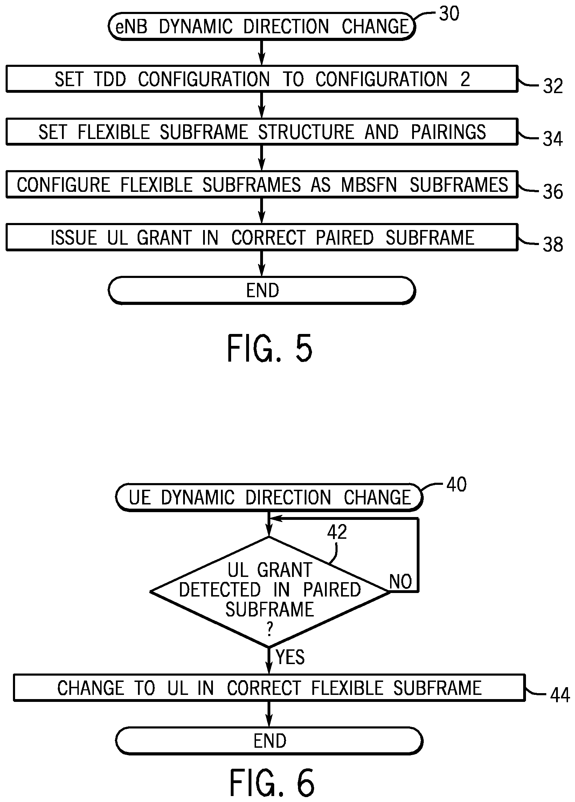

Thus referring to Figure 5, a sequence 30 for implementing dynamic direction changes at the eNodeB may be implemented in software, firmware and/or hardware. In software and firmware embodiments it may be implemented by computer readable instructions stored in one or more non-transitory computer readable media such as magnetic, optical or semiconductor storages. For example, in a software or firmware embodiment, the storage may be in the memory 26 of the eNodeB 12 shown in Figure 1. A hardware embodiment may be implemented in processor 24.

The sequence begins in one embodiment by setting the time division duplex (TDD) configuration to configuration 2 as indicated in block 32. Then the flexible subframe structure and pairings may be set in block 34. For example, a non-flexible subframe channel that is paired with the flexible subframe (that will have its direction changed) is set so that the signaling of the direction change may be implemented through the non-flexible symbols. In addition, the designation of which subframes will be flexible, which subframes will be downlink and which subframes will be uplink may be set at this point.

Then a first flexible subframe may be configured as an MBSFN subframe as indicated in block 36. This may be indicated by a higher keeper parameter mbsfn-SubframeConfigList before an indication signal is transmitted in a second subframe. Finally, the eNodeB issues the uplink (UL) grant (block 38) in the correct, paired second subframe to change the direction of the paired first flexible subframe. The uplink grant may be transmitted with the Downlink Control Information (DCI) format 0 or 4.

The reverse direction transition to downlink transmission happens automatically in one embodiment. When no uplink grant is received, the system transitions automatically back to the default mode, in this embodiment, the downlink direction. However, the transition could also be signaled by the eNodeB issuing a downlink grant.

The corresponding operation of the user equipment for dynamic direction change, shown in Figure 6, may be implemented in software, firmware or hardware. In software and firmware embodiments it may be implemented by computer executed instructions stored in one or more non-transitory computer readable media such as magnetic, optical or semiconductor storages. In one embodiment using software or firmware, the instructions may be stored in the memory 18 of the user equipment 10 as shown in Figure 1. In another embodiment, the sequence may be implemented in hardware in the processor 16 or in some other component.

The sequence 40 begins by detecting an uplink grant in the paired non-flexible subframe as indicated in diamond 42. In such case, the corresponding flexible subframe, paired with the non-flexible subframe, is changed to the uplink direction as indicated in block 44.

In some embodiments, there may be a time delay on the user equipment side inherent in making transmission direction changes dynamically. The user equipment needs to switch its radio frequency chain from receiving to transmission and may need to do some timing advance adjustments so that all uplink transmissions arrive at substantially the same time at eNodeB receiver. Thus the user equipment needs to take to make different uplink transmissions, depending on the distance between the eNodeB and the user equipment. Thus, a guard period, shown in Figure 4, may be provided between uplink transmission and downlink reception at the user equipment to accommodate the timing advance or switching delay. A data period follows the guard period for PUSCH transmission.

In some embodiments, the user equipment knows from the physical control format indicator (PCFICH) how many symbols will be used for downlink control versus downlink data. This may be signaled at the start of each downlink transmission in some embodiments. Therefore the user equipment knows how many symbols will change direction.

Typically, the user equipment needs to make measurements about the radio link quality in order for there to be backward compatibility with prior generations. Then the user equipment reports the results of these measurements to the eNodeB. These measurements include things like the downlink reference signal and the common reference signal, commonly called the cell-specific reference signals (CRS) collectively. Thus, when the direction of transmission is changed, there may be some cases where the user equipment does not know about the change and assumes that the CRS transmitted in a data region is accurate. By switching to the MBSFN mode, all transmissions of control information including those measurements are always done within the control region and since in some embodiments the direction of the control region never changes, no issues arise with respect to these measurements.

The following clauses and/or examples pertain to further embodiments:
One example embodiment may be a computer executed method comprising setting a first subframe to be switched between uplink and downlink transmission directions, pairing the first subframe with a second subframe that is not switchable between uplink and downlink transmission directions, and providing an indication signal in said second subframe to indicate a change of transmission direction of the first subframe. The method may also include maintaining said first subframe in a default transmission direction and changing a transmission direction of a data region of said first subframe from a default transmission direction to an uplink direction upon detection of said indication signal. The method may also include monitoring the second subframe in every radio frame to detect the indication signal. The method may also include said default transmission direction is a downlink direction determined by an uplink-downlink configuration. The method may also include said indication signal is an uplink grant transmitted in the second subframe to trigger transmission in the first subframe. The method may also include one control region and one data region and multiplexing in Time Domain Multiplexing. The method may also include changing the data region of said first subframe from a default transmission direction to an uplink direction and transmitting on the said first subframe following detection of the said indication signal. The method may also include maintaining the control region of said first subframe in the default transmission direction upon detection of said indication signal. The method may also include providing a guard period between uplink transmission and downlink reception to accommodate a timing advance or switching delay. The method may also include setting a time division duplex configuration to enable pairing of subframes. The method may also include wherein the first subframe is subframe 8 and the second subframe is subframe 4 in the same radio frame 'i', assuming subframe index numbering from 0 within radio frame 'i'. The method may also include wherein the first subframe is subframe 3 in the radio frame 'i + 1' and the paired second subframe is subframe 9 in the radio frame 'i', assuming subframe index starting from 0 within each radio frame.

Another example embodiment may be one or more non-transitory computer readable media storing instructions to perform a sequence comprising switching a first subframe between uplink and downlink transmission directions, pairing the first subframe with a second subframe that is not switchable between uplink and downlink transmission directions, and indicating in said second subframe a change of transmission direction of the first subframe. The media may include maintaining said first subframe in a default transmission direction and changing a transmission direction of a data region of said first subframe from a default transmission direction to an uplink direction upon detection of a signal indicating a change of transmission direction. The media may include wherein the said signal is an uplink grant transmitted in the second subframe to trigger transmission in the first subframe. The media may include said first subframe including one control region and one data region and multiplexing in Time Domain Multiplexing. The media may include setting a time division duplex configuration to enable pairing of subframes. The media may include wherein the first subframe is subframe 8 and the second subframe is subframe 4 in the same radio frame 'i', assuming subframe index numbering from 0 within radio frame 'i'. The media may include wherein the first subframe is subframe 3 in the radio frame 'i + 1' and the paired second subframe is subframe 9 in the radio frame 'i', assuming subframe index starting from 0 within each radio frame.

Another example embodiment may be a radio device comprising a processor to switch a first subframe paired with a second subframe, from an uplink to a downlink transmission direction using a signal in said second subframe, a memory coupled to said processor, and a radio transmitter coupled to said processor. The device may include said device is an eNodeB. The device may include said processor to maintain said first subframe in a default transmission direction and changing a transmission direction of a data region of said first subframe from a default transmission direction to an uplink direction upon detection of said indication signal. The device may include said processor to monitor the second subframe in every radio frame to detect the indication signal. The device may include said default transmission direction is a downlink direction determined by an uplink-downlink configuration. The device may include said signal is an uplink grant transmitted in the second subframe to trigger transmission in the first subframe. The device may include said first subframe including one control region and one data region and said device to multiplex using Time Domain Multiplexing. The device may include said processor to change the data region of said first subframe from a default transmission direction to an uplink direction and transmit on the said first subframe following detection of the said signal.

Another example embodiment may be a radio device comprising a processor to detect a signal in a second subframe and in response thereto, switch the transmission direction of a first subframe, a memory coupled to said processor, and a radio transmitter coupled to said processor. The device may include user equipment. The device may include said first subframe is paired with said second subframe, and said second subframe has a fixed transmission direction.

References throughout this specification to "one embodiment" or "an embodiment" mean that a particular feature, structure, or characteristic described in connection with the embodiment is included in at least one implementation encompassed within the present invention. Thus, appearances of the phrase "one embodiment" or "in an embodiment" are not necessarily referring to the same embodiment. Furthermore, the particular features, structures, or characteristics may be instituted in other suitable forms other than the particular embodiment illustrated and all such forms may be encompassed within the claims of the present application.

## Claims

1. A method for execution in a time division duplex long term evolution system, the method comprising the following steps:
setting a first subframe to be switched between uplink and downlink transmission directions, said first subframe including one control region and one data region;
pairing the first subframe with a second subframe that is not switchable between uplink and downlink transmission directions;
providing an indication signal in said second subframe to indicate a change of transmission direction of the first subframe; and
transmitting on the said first subframe following detection of the said indication signal;
**characterized by**
changing the data region of said first subframe from a default transmission direction to an uplink direction, and maintaining the control region of said first subframe in the default transmission direction upon detection of said indication signal.

2. The method of claim 1 wherein said default transmission direction is a downlink direction determined by an uplink-downlink configuration.

3. The method of claim 1 wherein the said indication signal is an uplink grant transmitted in the second subframe to trigger transmission in the first subframe.

4. The method of claim 1, including providing a guard period between uplink transmission and downlink reception to accommodate a timing advance or switching delay.

5. The method of claim 4, including providing, in the data region of said first subframe, a guard period between uplink transmission and downlink reception at the user equipment side to accommodate a timing advance or switching delay and a data period following the guard period for physical uplink shared channel transmission.

6. The method of claim 1, including setting a time division duplex configuration to enable pairing of subframes.

7. An eNodeB for use in a time division duplex long term evolution system, the eNodeB comprising:
a processor (24) to switch a first subframe that is paired with a second subframe, from an uplink to a downlink transmission direction, wherein said first subframe includes one control region and one data region; and
a radio transmitter (22) coupled to said processor, wherein the radio transmitter is adapted to provide an indication signal to a user equipment;
**characterized in that**
said indication signal indicates to a user equipment a change of the data region of said first subframe from a default transmission direction to an uplink direction, and that the control region of said first subframe is to be maintained in the default transmission direction.

8. A user equipment for use in a time division duplex long term evolution system, the user equipment comprising:
a processor (16) adapted to detect (42) an indication signal in a second subframe, and in response thereto, switch the transmission direction of a first subframe, wherein the first subframe is paired with the second subframe and the second subframe is not switchable between uplink and downlink transmission directions; and
a radio transmitter (14) coupled to said processor, said radio transmitter (14) being adapted to transmit on the said first subframe following detection of the said indication signal;
**characterized in that**
the user equipment is adapted to change (44) a data region of said first subframe from a default transmission direction to an uplink direction and to maintain the control region of said first subframe in the default transmission direction upon detection of said indication signal.

9. The user equipment of claim 8, where said first subframe is paired with said second subframe, and said second subframe has a fixed transmission direction.

10. One or more computer readable media storing instructions that, when executed by a processor of a eNodeB in a time division duplex long term evolution system, cause the eNodeB to:
switch a first subframe that is paired with a second subframe, from an uplink transmission direction to a downlink transmission direction, wherein said first subframe includes one control region and one data region; and
provide an indication signal to a user equipment;
**characterized in that**
said indication signal indicates to a user equipment that to receive said indication signal a change of the data region of said first subframe from a default transmission direction to an uplink direction, while the control region of said first subframe is to be maintained in the default transmission direction.

11. One or more computer readable media storing instructions that, when executed by a processor of a user equipment in a time division duplex long term evolution system, cause the user equipment to:
detect an indication signal in a second subframe, and in response thereto, switch the transmission direction of a first subframe, wherein the first subframe is paired with the second subframe and the second subframe is not switchable between uplink and downlink transmission directions; and
transmit on the said first subframe following detection of the said indication signal;
**characterized in that**
the execution of the instructions further cause the user equipment to change a data region of said first subframe from a default transmission direction to an uplink direction and to maintain the control region of said first subframe in the default transmission direction upon detection of said indication signal.

## Patentansprüche

1. Verfahren für die Ausführung in einem Zeitduplex-Long-Term-Evolution-System, wobei das Verfahren die folgenden Schritte umfasst:
Einstellen eines ersten Unterrahmens zum Umschalten zwischen Uplink- und Downlink-Übertragungsrichtungen, wobei der erste Unterrahmen ein Steuergebiet und ein Datengebiet enthält;
Paaren des ersten Unterrahmens mit einem zweiten Unterrahmen, der nicht zwischen Uplink- und Downlink-Übertragungsrichtung umschaltbar ist;
Bereitstellen eines Anzeigesignals in dem zweiten Unterrahmen zum Anzeigen einer Änderung der Übertragungsrichtung des ersten Unterrahmens; und
Übertragen auf dem ersten Unterrahmen nach einer Detektion des Anzeigesignals;
**gekennzeichnet durch**
Ändern des Datengebiets des ersten Unterrahmens von einer Standardübertragungsrichtung zu einer Uplink-Richtung und Beibehalten des Steuergebiets des ersten Unterrahmens in der Standardübertragungsrichtung nach Detektion des Anzeigesignals.

2. Verfahren nach Anspruch 1, wobei die Standardübertragungsrichtung eine durch eine Uplink-Downlink-Konfiguration bestimmte Downlink-Richtung ist.

3. Verfahren nach Anspruch 1, wobei das Anzeigesignal eine in dem zweiten Unterrahmen übertragene Uplink-Zuteilung ist zum Auslösen einer Übertragung im ersten Unterrahmen.

4. Verfahren nach Anspruch 1, einschließlich dem Bereitstellen einer Schutzperiode zwischen Uplink-Übertragung und Downlink-Empfang zum Berücksichtigen eines Timing Advance oder einer Schaltverzögerung.

5. Verfahren nach Anspruch 4, einschließlich dem Bereitstellen, in dem Datengebiet des ersten Unterrahmens, einer Schutzperiode zwischen Uplink-Übertragung und Downlink-Empfang auf der Teilnehmergerätseite zum Berücksichtigen eines Timing Advance oder einer Schaltverzögerung und einer Datenperiode nach der Schutzperiode für die Physical-Uplink-Shared-Channel-Übertragung.

6. Verfahren nach Anspruch 1, einschließlich dem Einstellen einer Zeitduplexkonfiguration zum Ermöglichen des Paarens von Unterrahmen.

7. eNodeB zur Verwendung in einem Zeitduplex-Long-Term-Evolution-System, wobei der eNodeB Folgendes umfasst:
einen Prozessor (24) zum Umschalten eines ersten Unterrahmens, der mit einem zweiten Unterrahmen gepaart ist, von einer Uplink- zu einer Downlink-Übertragungsrichtung, wobei der erste Unterrahmen ein Steuergebiet und ein Datengebiet enthält; und einen Funksender (22), der an den Prozessor gekoppelt ist, wobei der Funksender ausgelegt ist zum Liefern eines Anzeigesignals an ein Teilnehmergerät;
**dadurch gekennzeichnet, dass**
das Anzeigesignal einem Teilnehmergerät eine Änderung des Datengebiets des ersten Unterrahmens von einer Standardübertragungsrichtung zu einer Uplink-Richtung anzeigt und dass das Steuergebiet des ersten Unterrahmens in der Standardübertragungsrichtung beizubehalten ist.

8. Teilnehmergerät zur Verwendung in einem Zeitduplex-Long-Term-Evolution-System, wobei das Teilnehmergerät Folgendes umfasst:
einen Prozessor (16), der ausgelegt ist zum Detektieren (42) eines Anzeigesignals in einem zweiten Unterrahmen und als Reaktion darauf Umschalten der Übertragungsrichtung eines ersten Unterrahmens, wobei der erste Unterrahmen mit dem zweiten Unterrahmen gepaart ist und der zweite Unterrahmen nicht zwischen Uplink- und Downlink-Übertragungsrichtung umschaltbar ist; und
einen Funksender (14), der an den Prozessor gekoppelt ist, wobei der Funksender (14) ausgelegt ist zum Übertragen auf den ersten Unterrahmen nach einer Detektion des Anzeigesignals;
**dadurch gekennzeichnet, dass**
das Teilnehmergerät ausgelegt ist zum Ändern (44) eines Datengebiets des ersten Unterrahmens von einer Standardübertragungsrichtung zu einer Uplink-Richtung und zum Beibehalten des Steuergebiets des ersten Unterahmens in der Standardübertragungsrichtung bei Detektion des Anzeigesignals.

9. Teilnehmergerät nach Anspruch 8, wobei der erste Unterrahmen mit dem zweiten Unterrahmen gepaart ist und der zweite Unterrahmen eine feste Übertragungsrichtung besitzt.

10. Ein oder mehrere computerlesbare Medien, die Anweisungen speichern, die bei Ausführung durch einen Prozessor eines eNodeB in einem Zeitduplex-Long-Term-Evolution-System bewirken, dass der eNodeB:
einen ersten Unterrahmen, der mit einem zweiten Unterrahmen gepaart ist, von einer Uplink-Übertragungsrichtung zu einer Downlink-Übertragungsrichtung umschaltet, wobei der erste Unterrahmen ein Steuergebiet und ein Datengebiet enthält; und
ein Anzeigesignal an ein Teilnehmergerät liefert;
**dadurch gekennzeichnet, dass**
das Anzeigesignal einem Teilnehmergerät anzeigt, dass zum Empfangen des Anzeigesignals eine Änderung des Datengebiets des ersten Unterrahmens von einer Standardübertragungsrichtung zu einer Uplink-Richtung, während das Steuergebiet des ersten Unterrahmens in der Standardübertragungsrichtung beizubehalten ist.

11. Ein oder mehrere computerlesbare Medien, die Anweisungen speichern, die bei Ausführung durch einen Prozessor eines Teilnehmergeräts in einem Zeitduplex-Long-Term-Evolution-System bewirken, dass das Teilnehmergerät:
ein Anzeigesignal in einem zweiten Unterrahmen detektiert und als Reaktion darauf die Übertragungsrichtung eines ersten Unterrahmens umschaltet, wobei der erste Unterrahmen mit dem zweiten Unterrahmen gepaart ist und der zweite Unterrahmen nicht zwischen Uplink- und Downlink-Übertragungsrichtung umschaltbar ist; und
auf dem ersten Unterrahmen nach der Detektion des Anzeigesignals überträgt;
**dadurch gekennzeichnet, dass**
die Ausführung der Anweisungen weiterhin bewirkt, dass das Teilnehmergerät ein Datengebiet des ersten Unterrahmens von einer Standardübertragungsrichtung zu einer Uplink-Richtung ändert und das Steuergebiet des ersten Unterrahmens in der Standardübertragungsrichtung bei Detektion des Anzeigesignals beibehält.

## Revendications

1. Procédé pour exécuter un système d'évolution à long terme à duplex par division dans le temps, lequel procédé comprend les étapes suivantes :
- définir une première sous-trame à commuter entre les directions de transmission de liaison montante et de liaison descendante, la première sous-trame comprenant une région de commande et une région de données ;
- apparier la première sous-trame à une seconde sous-trame qui n'est pas commutable entre les directions de transmission de liaison montante et de liaison descendante ;
- fournir un signal d'indication dans la seconde sous-trame pour indiquer un changement de la direction de transmission de la première sous-trame ; et
- transmettre sur la première sous-trame suite à la détection du signal d'indication ;
- **caractérisé en ce que**
- on change la région de données dans la première sous-trame depuis une direction de transmission par défaut vers une direction de liaison montante et on maintient la région de commande de la première sous-trame dans la direction de transmission par défaut lors de la détection du signal d'indication.

2. Procédé selon la revendication 1, dans lequel la direction de transmission par défaut est une direction de liaison descendante déterminée par une configuration liaison montante-liaison descendante.

3. Procédé selon la revendication 1, dans lequel le signal d'indication est une attribution de liaison montante transmise dans la seconde sous-trame pour déclencher la transmission dans la première sous-trame.

4. Procédé selon la revendication 1, comprenant le fait de fournir une période de garde entre la transmission en liaison montante et la réception en liaison descendante pour prendre en compte une avance de synchronisation ou un retard de commutation.

5. Procédé selon la revendication 4, comprenant le fait de fournir, dans la région de données de la première sous-trame, une période de garde entre la transmission en liaison montante et la réception en liaison descendante au niveau de l'équipement d'utilisateur pour prendre en compte une avance de synchronisation ou un retard de commutation, et une période de données suivant la période de garde pour une transmission par canal partagé en liaison montante physique.

6. Procédé selon la revendication 1, comprenant la fait de définir une configuration de duplex par division dans le temps pour permettre l'appariement de sous-trames.

7. Noeud de type eNodeB destiné à être utilisé dans un système d'évolution à long terme à duplex par division dans le temps, lequel eNodeB comprend :
- un processeur (24) pour commuter une première sous-trame appariée à une seconde sous-trame depuis une direction de transmission de liaison montante vers une direction de transmission de liaison descendante, la première sous-trame comprenant une région de commande et une région de données ; et
- un émetteur radio (22) couplé au processeur, lequel émetteur radio est conçu pour fournir un signal d'indication à un équipement d'utilisateur ;
- **caractérisé en ce que**
- le signal d'indication indique à un équipement d'utilisateur un changement de la région de données dans la première sous-trame depuis une direction de transmission par défaut vers une direction de liaison montante et que la région de commande de la première sous-trame doit être maintenue dans la direction de transmission par défaut.

8. Equipement d'utilisateur destiné à être utilisé dans un système d'évolution à long terme à duplex par division dans le temps, lequel équipement d'utilisateur comprend :
- un processeur (16) conçu pour détecter (42) un signal d'indication dans une seconde sous-trame et en réponse à cela, commuter la direction de transmission d'une première sous-trame, la première sous-trame étant appariée à la seconde sous-trame, et la seconde sous-trame n'étant pas commutable entre les directions de transmission de liaison montante et de liaison descendante ; et
- un émetteur radio (14) couplé au processeur, lequel émetteur radio (14) est conçu pour transmettre sur la première sous-trame suite à la détection du signal d'indication ;
- **caractérisé en ce que** :
- l'équipement d'utilisateur est conçu pour changer (44) une région de données dans la première sous-trame depuis une direction de transmission par défaut vers une direction de liaison montante et maintenir la région de commande de la première sous-trame dans la direction de transmission par défaut lors de la détection du signal d'indication.

9. Equipement d'utilisateur selon la revendication 8, dans lequel la première sous-trame est appariée à la seconde sous-trame, et la seconde sous-trame possède une direction de transmission fixe.

10. Support ou plurité de supports lisibles par ordinateur stockant des instructions qui, lorsqu'elles sont exécutées par un processeur d'un eNodeB dans un système d'évolution à long terme à duplex par division dans le temps, font que le eNodeB va :
- commuter une première sous-trame appariée à une seconde sous-trame depuis une direction de transmission de liaison montante vers une direction de transmission de liaison descendante, la première sous-trame comprenant une région de commande et une région de données ; et
- fournir un signal d'indication à un équipement d'utilisateur ;
- caractérisé(e) en ce que :
- le signal d'indication indique à un équipement d'utilisateur que pour recevoir le signal d'indication un changement de la région de données dans la première sous-trame depuis une direction de transmission par défaut vers une direction de liaison montante, tandis que la région de commande de la première sous-trame doit être maintenue dans la direction de transmission par défaut.

11. Support ou plurité de supports lisibles par ordinateur stockant des instructions qui, lorsqu'elles sont exécutées par un processeur d'un équipement d'utilisateur dans un système d'évolution à long terme à duplex par division dans le temps, font que l'équipement d'utilisateur va :
- détecter un signal d'indication dans une seconde sous-trame et en réponse à cela, commuter la direction de transmission d'une première sous-trame, la première sous-trame étant appariée à la seconde sous-trame, et la seconde sous-trame n'étant pas commutable entre les directions de transmission de liaison montante et de liaison descendante ; et
- transmettre sur la première sous-trame suite à la détection du signal d'indication ;
- caractérisé(e) en ce que :
- l'exécution des instructions fait en outre que l'équipement d'utilisateur va changer une région de données dans la première sous-trame depuis une direction de transmission par défaut vers une direction de liaison montante et maintenir la région de commande de la première sous-trame dans la direction de transmission par défaut lors de la détection du signal d'indication.
